# EUROPEAN PATENT APPLICATION

(11) **EP 4 510 323 A1**
(43) Date of publication of application: **19.02.2025**
(21) Application number: 22960094.5
(22) Date of filing: 29.09.2022
(51) Int. Cl.: H01M 50/152, H01M 50/342

(54) **END COVER, BATTERY CELL, BATTERY AND ELECTRIC DEVICE**

(71) Applicant: Contemporary Amperex Technology Co., Limited, Ningde, Fujian 352100 (CN)
(72) Inventor: CHEN, Shengwang, Ningde, Fujian 352100 (CN); FAN, Xuefeng, Ningde, Fujian 352100 (CN); GUO, Zhijun, Ningde, Fujian 352100 (CN); WANG, Peng, Ningde, Fujian 352100 (CN)
(74) Representative: Ran, Handong
(86) International application number: PCT/CN2022/122809
(87) International publication number: WO 2024/065457

(57) **Abstract**

The embodiments of the present application belong to the technical field of batteries. Provided are an end cover, a battery cell, a battery and an electric device. The end cover comprises a cover body and a reinforcing portion, wherein the cover body is configured to seal an opening of a casing of the battery cell, and is provided with a first surface in the thickness direction of the cover body; and the reinforcing portion protrudes from the first surface, and is configured to reinforce the cover body. In such an end cover, the reinforcing portion is arranged on the first surface of the cover body in the thickness direction, and plays a role in reinforcing the cover body, thereby improving the deformation resistance capability of the end cover and the anti-fatigue performance of the end cover, and thus reducing the risk of the end cover being damaged due to fatigue, such that the end cover has longer service life, thus prolonging the service life of the battery cell.

## Description

### Technical Field

The present application relates to the technical field of batteries, and particularly to an end cover, a battery cell, a battery and an electrical device.

### Background

Batteries are widely applied to electronic devices, such us mobile phones, laptops, battery vehicles, electric vehicles, electric airplanes, electric ships, electric toy cars, electric toy ships, electric toy airplanes, electric tools, and the like.

In battery technology, not only the safety of the battery cell needs to be considered, but also the service life of the battery cell needs to be considered. Therefore, how to improve the service life of battery cell is an urgent technical problem that needs to be solved.

### Summary of the Invention

Embodiments of the present application provide an end cover, a battery cell, a battery and an electrical device, which can effectively improve the service life of the battery cell.

In a first aspect, embodiments of the present application provide an end cover for a battery cell, including: a cover body and a reinforcing portion, where the cover body is configured to close an opening of a case of the battery cell, and the cover body has a first surface along a thickness direction of the cover body; the reinforcing portion protrudes from the first surface, and the reinforcing portion is configured to reinforce the cover body.

In the above technical solution, a surface of the cover body in the thickness direction is provided with a reinforcing portion, and the reinforcing portion has an reinforcing effect on the cover body, improving the deformation resistance ability of the end cover, improving the fatigue resistance performance of the end cover, and reducing the risk of the end cover being damaged due to fatigue, which makes the end cover have a longer service life, thereby increasing the service life of the battery cell.

In some embodiments, the reinforcing portion includes a first arc portion and a second arc portion protruding from the first surface, and an opening of the first arc portion is arranged opposite to an opening of the second arc portion. The reinforcing part of this structure has a larger radiation range and can increase the reinforcement range of the cover body. The arc-shaped first arc portion and second arc portion themselves have better deformation resistance ability and are less likely to deform when subjected to a force along the thickness direction, which can have a better reinforcing effect on the cover body, further improving the deformation resistance ability and fatigue resistance performance of the end cover.

In some embodiments, the first arc portion and the second arc portion are connected to form a connection area, and the connection area has a first end and a second end opposite to each other, wherein the first arc portion comprises a first arc segment and a second arc segment, the second arc portion comprises a third arc segment and a fourth arc segment, the first arc segment and the third arc segment are connected to the first end, and the second arc segment and the fourth arc segment are connected to the second end, wherein a distance between the first arc segment and the third arc segment gradually increases along a direction from the second end to the first end; and a distance between the second arc segment and the fourth arc segment gradually increases along a direction from the first end to the second end. Along the direction from the second end to the first end, the distance between the first arc segment and the third arc segment gradually increases, so that the reinforcing range of the first arc segment and the third arc segment gradually increases. In addition, the arc-shaped first arc segment and third arc segment themselves have good deformation resistance abilities, which further improves the reinforcing effect of the reinforcing portion on the cover body. Along the direction from the first end to the second end, the distance between the second arc segment and the fourth arc segment gradually increases, so that the reinforcing range of the second arc segment and the fourth arc segment gradually increases. The arc-shaped second arc segment and fourth arc segment themselves have good deformation resistance abilities, which further improves the reinforcing effect of the reinforcing portion on the cover body.

In some embodiments, a width of the connection area gradually increases along a direction from a middle position of the connection area to the first end and the second end. In this way, the reinforcing ability of the connecting area gradually increases from the middle position to both ends. The connecting area itself has good deformation resistance ability, which improves the reinforcing effect of the connecting area on the cover body. In addition, since the width of the connecting area gradually increases from the middle position to both ends, the distance between the first arc segment and the third arc segment gradually increases along the direction from the second end to the first end, and the distance between the second arc segment and the fourth arc segment gradually increases along the direction from the first end to the second end, so that the width of the reinforcing portion gradually increases from the middle to both ends, and the reinforcing portion has a better reinforcing effect on the cover body.

In some embodiments, the cover body is circular, and a center line of the cover body passes through the middle position. When the internal pressure of the battery cell changes, the central area of the cover body is most likely to deform. The central axis of the cover body passes through the middle position of the connection area, so that the reinforced portion can reinforce the central area of the cover body, thereby reducing the risk of the end cover being damaged due to fatigue.

In some embodiments, the first arc segment has a first side facing the third arc segment, the third arc segment has a side facing the first arc segment, and the first side and the third side are connected by a first fillet surface; and/or the second arc segment has a second side facing the fourth arc segment, the fourth arc segment has a fourth side facing the second arc segment, and the second side and the fourth side are connected by a second fillet surface. The first side and the third side are connected through the first fillet surface, which reduces the risk of stress concentration at the connection position between the first arc segment and the third arc segment; the second side and the fourth side surfaces are connected through the second rounded surface, which reduces the risk of stress concentration at the connection position between the second arc section and the fourth arc section.

In some embodiments, the first arc segment and the third arc segment are symmetrically arranged; and/or the second arc segment and the fourth arc segment are arranged symmetrically; and/or the first arc segment and the second arc segment are arranged symmetrically; and/or the third arc segment and the fourth arc segment are arranged symmetrically. The first arc segment and the third arc segment are symmetrically arranged. When the cover body is subjected to a force, the forces on the first arc segment and the third arc segment are basically the same. The abilities of the first arc segment and the third arc segment to resist the deformation of the cover body are basically the same. Both the first arc segment and the third arc segment can have a very good effect on reinforcing the cover body. The second arc section and the fourth arc section are arranged symmetrically. When the cover body is subjected to a force, the forces on the second arc section and the fourth arc section are basically the same. The second arc section and the fourth arc section are symmetrically arranged. The abilities of the second arc segment and the fourth arc segment to resist the deformation of the cover body are basically the same. Both the second arc segment and the fourth arc segment can have a very good effect on reinforcing the cover body. The first arc section and the second arc section are arranged symmetrically. When the cover body is subjected to a force, the forces on the first arc section and the second arc section are substantially the same. The abilities of the first arc section and the second arc segment to resist the deformation of the cover body are basically the same. Both the first arc segment and the second arc segment can have a very good effect on reinforcing the cover body. The third arc section and the fourth arc section are arranged symmetrically. When the cover body is subjected to a force, the forces on the third arc section and the fourth arc section are basically the same. The abilities of the third arc section and the fourth arc segment to resist the deformation of the cover body are basically the same. Both the third arc segment and the fourth arc segment can have a very good effect on reinforcing the cover body.

In some embodiments, a central angle of the first arc portion is 01, which satisfies: θ1>90°; and/or a center angle of the second arc portion is Θ2, which satisfies: Θ2>90°. θ1>90°, which increases the reinforcement range of the first arc portion on the cover body; Θ2>90°, which increases the reinforcement range of the second arc portion on the cover body.

In some embodiments, the reinforcing portion is integrally formed with the cover body. In this way, the connection strength between the reinforcing portion and the cover body can be enhanced, improving the long-term reliability of the end cover.

In some embodiments, the cover body has a second surface opposite to the first surface along the thickness direction, and the cover body is formed with a first recess, wherein the first recess is recessed from the second surface along a direction close to the first surface, and the reinforcing pat protruding from the first surface is formed at a position of the cover body corresponding to the first recess. During molding, the first recess can be formed on the second surface by stamping, thereby forming the reinforcing portion protruding from the first surface. The forming method of the reinforcing portion is simple. The arrangement of the first recess causes the cover body to form a recessed structure at the position where the reinforcing portion is provided, so that the reinforcing portion has better deformation resistance ability, improving the reinforcing effect of the reinforcing portion on the cover body.

In some embodiments, along the thickness direction, a height of the reinforcing portion protruding from the first surface is H, and a distance between the first surface and the second surface is D, which satisfy: 0.04mm²≤D*H≤0.81 mm². When D*H<0.04mm², the thickness of at least one of D and H is too small, the end cover has poor deformation resistance ability, and the end cover is prone to deformation. When D*H>0.81mm², at least one of D and H is too thick, and the end cover occupies a large space. Therefore, when 0.04mm²≤D*H≤0.81mm², on the one hand, the deformation resistance ability of the end cover can be improved, and on the other hand, the end cover can be prevented from occupying a large space.

In some embodiments, 0.06mm²<D*H<0.64mm². In this way, on the one hand, the deformation resistance ability of the end cover can be improved; on the other hand, the space occupied by the end cover is further reduced. In addition, when D*H>0.64mm², when the reinforcing portion is formed by stamping, the stretching amount of the reinforcing portion is too large, resulting in the weakening of the strength of the reinforcing portion. Therefore, D*H≤0.64mm² can improve the strength of the reinforcing part.

In some embodiments, 0.25mm≤H≤0.8mm; and/or, 0.25mm≤D≤0.8mm. When H<0.25mm, the height of the reinforcing portion protruding from the first surface is smaller, and the reinforcing effect of the reinforcing portion on the cover body is smaller. When H>0.8 mm, the height of the reinforced portion protruding from the first surface is larger, and the reinforced portion occupies a larger space. Therefore, when 0.25 mm ≤ H ≤ 0.8 mm, on the one hand, the reinforcing effect of the reinforcing portion on the cover body can be improved, and on the other hand, the space occupied by the reinforcing portion can be reduced. When D<0.25mm, the distance between the first surface and the second surface is small, the cover body has poor deformation resistance ability, and the cover body has poor strength. When D>0.8mm, the thickness of the cover body is larger, and the cover body occupies a larger space. Therefore, when 0.25mm≤H≤0.8mm, on the one hand, the deformation resistance ability and the strength of the cover body can be improved, and on the other hand, the space occupied by the cover body can be reduced.

In some embodiments, the reinforcing portion has a side wall and a bottom wall, the side wall surrounds the bottom wall, and the side wall and the bottom wall jointly define the first recess, wherein a maximum thickness of the side wall is L1, and a maximum thickness of the bottom wall is L2; a distance between the first surface and the second surface along the thickness direction is D, which satisfies: L1≤D, and L2≤D. L1 and L2 are not greater than D, so that the maximum thickness of the side wall and the maximum thickness of the bottom wall will not exceed the distance between the first surface and the second surface, which can simplify the molding process. The reinforcing portion can be formed by stamping, and the forming method is simple.

In some embodiments, a minimum thickness of the bottom wall is L3, and a minimum thickness of the side wall is L4, which satisfy: D-L3≤0.2mm; and/or, D-L4≤0.2 mm. If D-L3>0.2mm, the minimum thickness of the bottom wall is small, and the strength of the bottom wall is poor, and the bottom wall is easily damaged. Therefore, when D-L3≤0.2mm, it can ensure that the bottom wall has sufficient strength; if D-L4>0.2mm, the minimum thickness of the side wall is smaller, and the strength of the side wall is poor, and the side wall is easily damaged. Therefore, when D-L4≤0.2mm, it can ensure that the side wall has sufficient strength.

In some embodiments, the cover body has a pressure relief area, the first surface is at least partially located in the pressure relief area, the cover body is formed with a scored groove, the scored groove is arranged along an edge of the pressure relief area, and the pressure relief area is configured to open with the scored groove as a boundary when the battery cell is depressurized, wherein the reinforcing portion is provided in the pressure relief area. The arrangement of the pressure relief area enables the end cover to have a pressure relief function. The pressure relief area can be opened with the scored groove as the boundary, and has a large pressure relief area. The reinforcing portion is disposed in the pressure relief area. The reinforcing portion has a reinforcing effect on the pressure relief area, and improves the deformation resistance ability of the pressure relief area. When the internal pressure of the battery cell changes, the pressure relief area is less likely to deform, reducing the risk of the pressure relief area being opened during normal use of the battery cell.

In some embodiments, the scored groove is a groove extending along a closed trajectory. When the battery cell is depressurized, the pressure relief area can be opened in a manner to separate from the outside of the battery cell, so that the battery cell has a larger pressure relief area, improving the pressure relief efficiency.

In some embodiments, the scored groove is annular. The annular scored groove has a simple structure and is easy to form.

In some embodiments, the cover body is circular, and the scored groove is coaxially arranged with the cover body. In this way, the pressure relief area defined by the scored groove is located in the central area of the cover body, which is conducive to timely opening of the pressure relief area for pressure relief.

In some embodiments, the first surface faces an interior of the case, and the scored groove is formed on the first surface. Since the scored groove is disposed on the first surface and the first surface faces the interior of the case, the scored groove faces the interior of the battery cell, and the scored groove is not exposed to the outside of the battery cell, reducing the risk of oxidation at the position on the cover body where the scored groove is formed due to exposure to the outside of the battery cell. Since the reinforcing portion is disposed on the first surface, which faces the interior of the case, the reinforcing portion can utilize the internal space of the battery cell1, and the reinforcing portion does not occupy the external space of the battery cell.

In some embodiments, the reinforcing portion includes a first arc portion and a second arc portion protruding from the first surface, and an opening of the first arc portion is arranged opposite to an opening of the second arc portion; a minimum distance between an end of the first arc portion in its extension direction and the scored groove is S1, which satisfies: S1>0.5mm; and/or, a minimum distance between an end of the second arc portion in its extension direction and the scored groove is S2, which satisfies: S2>0.5mm. S1>0.5mm, which reduces the influence of the first arc portion on the scored groove, and the risk of squeezing the scored groove due to the end of the first arc portion being too close to the scored groove is reduced. S2>0.5mm, which reduces the influence of the second arc portion on the scored groove, and reduces the risk of squeezing the scored groove due to the end of the second arc portion being too close to the scored groove.

In some embodiments, the cover body includes a body part and a connection part, the body part has the first surface, and the connection part is arranged around an outer edge of the case, wherein in the thickness direction, the connection part protrudes from the body part along a direction facing an interior of the case, and the connection part is configured to extend into the case and form a positioning fit with the case. The connection part protrudes from the body part in a direction facing the interior of the case. The connection part can form a positioning fit with the case, which can improve the assembly efficiency of the end cover and the case.

In some embodiments, the connection part has a third surface facing the interior of the case along the thickness direction, the first surface faces the interior of the case, and the reinforcing portion does not extend beyond the third surface along a direction facing the interior of the case. In this way, when the third surface of the connection part abuts against the internal components of the battery cell, the reinforcing portion is less likely to interfere with the internal components of the battery cell.

In some embodiments, the body part has a fourth surface and a fifth surface opposite to each other along the thickness direction, and the connection part protrudes from the fourth surface; and the cover body has a pressure relief area, the body part is formed with a scored groove and a second recess, and the scored groove is arranged along an edge of the pressure relief area, wherein the pressure relief area is configured to open with the scored groove as a boundary when the battery cell is depressurized, and the second recess is recessed from the fifth surface along a direction close to the fourth surface, wherein a projection of a bottom surface of the second recess along the thickness direction covers the scored groove. The second recess is arranged such that there is a certain distance between the pressure relief area and the fifth surface. When the fifth surface is in contact with external components, the influence of the external components on the pressure relief area can be reduced, so that the pressure area can be opened outward when the battery cell is depressurized, thereby reducing the risk that the pressure release area will be obstructed by external components, causing the pressure release area to fail to open normally.

In some embodiments, the fifth surface is a surface of the end cover farthest from the case along the thickness direction. The fifth surface can be used as a supporting surface for the battery cell. When the battery cell is placed on an external component, the fifth surface contacts the external component to ensure the stability of the battery cell when placed on the external component.

In some embodiments, a convex portion protruding from the fourth surface is formed at a position of the body part corresponding to the second recess, and a surface of the convex portion facing away from the fourth surface is the first surface. The arrangement of the convex portion can increase the strength of the area of the body part where the second recess is formed.

In some embodiments, the bottom surface of the second recess is arranged opposite to the first surface along the thickness direction; and the body part is formed with a first recess, the first recess is recessed from the bottom surface of the second recess along a direction close to the first surface, and the reinforcing pat protruding from the first surface is formed at a position of the cover body corresponding to the first recess. During molding, the first recess can be formed on the bottom surface of the second recess by stamping, thereby forming the reinforced portion protruding from the first surface. The molding method of the reinforcing portion is simple. The provision of the first recess causes the body part to form a recessed structure at the position where the reinforcing portion is disposed, so that the reinforcing portion has better deformation resistance ability, improving the reinforcing effect of the reinforcing portion on the body part.

In some embodiments, the cover body further includes an edge portion, the edge portion is arranged around an outer edge of the connection part, and the edge portion is configured to connect an end of the case formed with the opening. When assembling the end cover and the case, after the connection part is positioned and matched with the case, the edge portion can abut against the end of the case formed with the opening, and the edge portion can be easily connected to the end of the case formed with the opening, for example, the edge portion is welded to the end of the case formed with the opening.

In some embodiments, a material of the end cover includes at least one of steel, stainless steel and nickel-plated steel. This end cover has better strength and stiffness and longer service life.

In a second aspect, the embodiments of the present application provide a battery cell, including a case and an end cover provided by any one of the embodiments of the first aspect; the case has an opening; and the cover body closes the opening.

In some embodiments, the first surface faces an interior of the case along the thickness direction.

In a third aspect, the embodiments of the present application provide a battery, including the battery cell provided by any one of the embodiments of the second aspect.

In a fourth aspect, the embodiments of the present application provide an electrical device, including the battery provided by any one of the embodiments of the third aspect.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural view of a vehicle provided in some embodiments of the present application.
Fig. 2 is an exploded view of a battery provided in some embodiments of the present application.
Fig. 3 is an exploded view of a battery cell provided in some embodiments of the present application.
Fig. 4 is an exploded view of an end cover shown in Fig. 3.
Fig. 5 is an isometric view of the end cover shown in Fig. 4.
Fig. 6 is a top view of the end cover shown in Fig. 5;
Fig. 7 is a schematic structural view of the reinforcing portion shown in Fig. 6;
Fig. 8 is an A-A sectional view of the end cover shown in Fig. 6;
Fig. 9 is a bottom view of the end cover shown in Fig. 8;
Fig. 10 is a partial enlarged view of B of the end cover shown in Fig. 8;
Fig. 11 is a partial enlarged view of C of the battery cell shown in Fig. 4.

Reference numerals: 1-case; 11-wall part; 2-electrode assembly; 21-first tab; 22-second tab; 3-end cover; 31-cover body; 311-first surface; 312-second surface; 313-first recess; 314-pressure relief area; 315-scored groove; 316-body part; 3161-fourth surface; 3162-fifth surface; 3163-second recess; 3164-convex portion; 317-connection part; 3171-third surface; 318-edge portion; 3181-step surface; 32-reinforcing portion; 321-first arc portion; 3210-first arc surface; 3211-first arc segment; 3211a-first side; 3212-second arc segment; 3212a-second side; 322-second arc portion; 3220-second arc surface; 3221-third arc segment; 3221a-third side; 3222-fourth arc segment; 3222a-fourth side; 323-connection area; 3231-first end; 3232-second end; 324-first fillet surface; 325-second fillet surface; 326-side wall; 327 - bottom wall; 4-electrode terminal; 5-current collector; 10-battery cell; 20-box; 201-first part; 202-second part; 100-battery; 200-controller; 300-motor; 1000-vehicle; O-middle position; F-first reference plane; G-second reference plane; I-first connection line; K-second connection line; M-third connection line; N-fourth connection line; X-first direction; Z-thickness direction.

### Detailed Description

In order to make the objectives, technical solutions and advantages of the embodiments of the present application clearer, the technical solutions in the embodiments of the present application will be clearly described below in conjunction with the drawings in the embodiments of the present application. It is apparent that the described embodiments are a part of the embodiments of the present application rather than all the embodiments. Based on the embodiments in the present application, all other embodiments obtained by those of ordinary skill in the art without creative effort fall within the protection scope of the present application.

Unless otherwise defined, all technical and scientific terms used in the present application have the same meaning as commonly understood by those skilled in the art belonging to the technical field of the present application. The terms used in the specification of the present application are intended only for the purpose of describing specific embodiments and are not intended to limit the present application. The terms "including" and "having" and any variations thereof in the specification and claims of the present application and in the description of drawings above are intended to cover non-exclusive inclusion. The terms "first", "second", and the like in the specification and claims of the present application or the above drawings are used for distinguishing different objects, rather than used for describing a specific order or primary and secondary relationship.

The reference to "embodiments" in the present application means that specific features, structures or characteristics described in conjunction with embodiments may be included in at least one embodiment of the present application. The appearance of this phrase in various places in the specification does not necessarily refer to the same embodiment, nor is it a separate or alternative embodiment that is mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals represent the same components. Moreover, for simplicity, in different embodiments, detailed descriptions of the same components are omitted. It should be understood that the thicknesses, lengths, widths and other sizes of various components in the embodiments of the present application shown in the drawings, as well as the overall thickness, length, width and other sizes of an integrated apparatus are only illustrative and should not constitute any restrictions on the present application.

The term "a plurality of" in the present application refers to two or more (including two).

In the present application, the battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, rectangular, or in other shapes, which is not limited in the embodiments of the present application. Battery cells are generally divided into three types according to encapsulating manners: cylindrical battery cells, square battery cells and pouch cells, which are not limited in the embodiments of the present application.

The battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box body for encapsulating one or a plurality of battery cells. The box body can prevent liquids or other foreign matters from affecting the charging or discharging of the battery cell.

The battery cell includes an electrode assembly and an electrolyte solution, and the electrode assembly includes a positive electrode plate, a negative electrode plate and a separator. The battery cell operates mainly relying on movement of metal ions between the positive electrode plate and the negative electrode plate. The positive electrode plate includes a positive electrode current collector and a positive electrode active material layer, the positive electrode active material layer is coated on a surface of the positive electrode current collector, the positive electrode current collector which is not coated with the positive electrode active material layer protrudes from the positive electrode current collector coated with the positive electrode active material layer, and the positive electrode current collector which is not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, the negative electrode active material layer is coated on a surface of the negative electrode current collector, the negative electrode current collector which is not coated with the negative electrode active material layer protrudes from the negative electrode current collector which is coated with the negative electrode active material layer, and the negative electrode current collector which is not coated with the negative electrode active material layer is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The separator may be made of polypropylene (PP), polyethylene (PE), or the like. In addition, the electrode assembly may be of a wound structure or a stacked structure, which is not limited in the embodiments of the present application.

The inventor noticed that during use of the battery cell, gas may be generated inside the battery cell, making internal pressure of the battery cell changed, causing the end cover of the battery cell to deform. In the long run, the end cover is easily damaged due to fatigue, affecting the service life of the battery cell.

In view of this, embodiments of the present application provide an end cover, wherein a surface of the cover body in the thickness direction is provided with a reinforcing portion, and the cover body is reinforced by the reinforcing portion.

In such an end cover, the reinforcing portion has an reinforcing effect on the cover body, improving the deformation resistance ability of the end cover, improving the fatigue resistance performance of the end cover, and reducing the risk of the end cover being damaged due to fatigue, which makes the end cover have a longer service life, thereby increasing the service life of the battery cell.

The technical solutions described in the embodiments of the present application are applicable to batteries and electrical devices using the batteries.

The electrical devices can be vehicles, mobile phones, portable devices, laptops, ships, spacecraft, electric toys and electric tools, etc. Vehicles can be fuel vehicles, gas vehicles or new energy vehicles, and the new energy vehicles can be pure electric vehicles, hybrid vehicles or extended-range vehicles, etc.; the spacecraft include aircraft, rockets, space shuttles, spaceships, etc.; electric toys include fixed or mobile electric toys, such as game consoles, electric car toys, electric ship toys and electric aircraft toys, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, planers, etc. The embodiments of the present application have no special restrictions on the above electrical devices.

For convenience of description in the following embodiments, the electrical device being a vehicle is taken as an example for description.

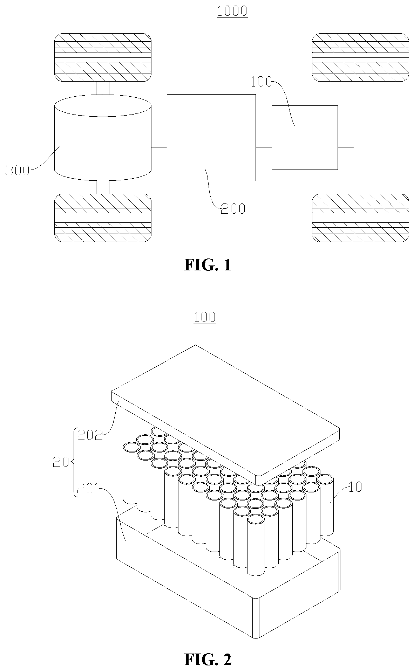

Referring to Fig. 1, Fig. 1 is a schematic structural view of a vehicle 1000 provided in some embodiments of the present application. A battery 100 is arranged inside the vehicle 1000, and the battery 100 may be arranged at the bottom, head or tail of the vehicle 1000. The battery 100 may be configured to supply power to the vehicle 1000. For example, the battery 100 may be used as an operational power supply of the vehicle 1000.

The vehicle 1000 may further include a controller 200 and a motor 300. The controller 200 is configured to control the battery 100 to supply power to the motor 300, so as to meet the working power demand for starting, navigation and driving of the vehicle 1000.

In some embodiments of the present application, the battery 100 not only may serve as an operational power supply of the vehicle 1000, but also may serve as a driving power supply of the vehicle 1000, thus replacing or partially replacing fuel or natural gas to provide driving power for the vehicle 1000.

Referring to Fig. 2, Fig. 2 is an exploded view of a battery 100 provided in some embodiments of the present application. The battery 100 includes a battery cell 10 and a box body 20, and the box body 20 is configured to accommodate the battery cell 10.

Herein, the box body 20 is a component for accommodating the battery cell 10, the box body 20 provides an accommodating space for the battery cell 10, and the box body 20 may be of various structures. In some embodiments, the box body 20 may include a first part 201 and a second part 202, and the first part 201 and the second part 202 cover each other to define an accommodating space for accommodating the battery cell 10. The first part 201 and the second part 202 may be of a variety of shapes, such as a rectangular parallelepiped, a cylinder, or the like. The first part 201 may be a hollow structure with one side open, the second part 202 may also be a hollow structure with one side open, and the opening side of the second part 202 covers the opening side of the first part 201, so as to form a box body 20 with an accommodating space. Alternatively, the first part 201 may be a hollow structure with one side open, the second part 202 may be a plate-like structure, and the second part 202 covers the opening side of the first part 201 to form a box body 20 with an accommodating space. The first part 201 and the second part 202 may be sealed by a sealing member, which may be a sealing ring, a sealant, or the like.

There may be one or more battery cell 10 in a battery 100. If there are a plurality of battery cells 10, the plurality of battery cells 10 may be connected in series or parallel or parallel-series connection, where the parallel-series connection means that the plurality of battery cells 10 are connected in both series and parallel. The plurality of battery cells 10 may be connected in series or parallel or parallel-series connection to form battery modules first, and then, the plurality of battery modules are connected in series or parallel or parallel-series connection to form a whole which is accommodated in the box body 20. Alternatively, all the battery cells 10 may be directly connected in series or parallel or parallel-series connection, and then, a whole composed of all battery cells 10 is accommodated in the box body 20.

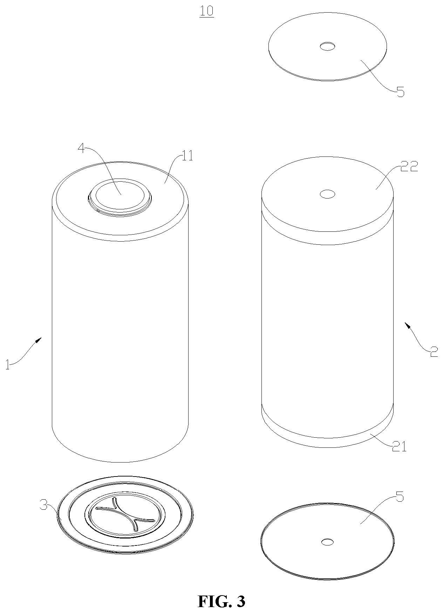

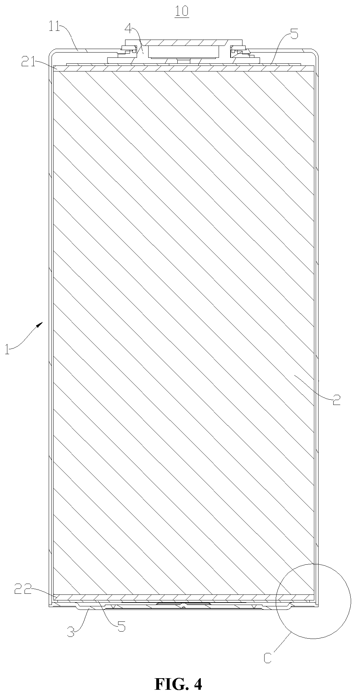

Referring to Fig. 3 and Fig. 4, Fig. 3 is an exploded view of a battery cell 10 provided in some embodiments of the present application; and Fig. 4 is a sectional view of a battery cell 10 shown in Fig. 3. The battery cell 10 may include a case 1, an electrode assembly 2 and an end cover 3.

The case 1 is a component for accommodating the electrode assembly 2, and the case 1 may be a hollow structure with an opening formed at one end. The case 1 may be of a variety of shapes, such as a cylinder, a rectangular parallelepiped, or the like. The case 1 may be made of various materials, such as copper, iron, aluminum, steel, aluminum alloy, or the like.

The electrode assembly 2 is a component in which an electrochemical reaction occurs in the battery cell 10. The electrode assembly 2 may include a positive electrode plate, a negative electrode plate and a separator. The electrode assembly 2 may be a wound structure formed by winding the positive electrode plate, the separator and the negative electrode plate, or may be a stacked structure formed by stacking the positive electrode plate, the separator and the negative electrode plate. The electrode assembly 2 has a first tab 21 and a second tab 22, one of the first tab 21 and the second tab 22 is a positive tab, and the other is a negative tab. The positive tab may be a portion of the positive electrode plate on which the positive electrode active material layer is not coated, and the negative tab may be a portion of the negative electrode plate on which the negative electrode active material layer is not coated.

The end cover 3 is a component that covers the opening of the case 1 to isolate the internal environment of the battery cell 10 from the external environment. The end cover 3 and the case 1 jointly define an accommodating space for accommodating the electrode assembly 2, the electrolyte solution, and other components. The shape of the end cover 3 may be adapted to the shape of the case 1. For example, the case 1 is a rectangular parallelepiped structure, and the end cover 3 is a rectangular structure adapted to the case 21. For another example, as shown in Fig. 3 and Fig. 4, the case 1 is a cylinder structure, and the end cover 3 is a circular structure adapted to the case 1. The end cover 3 may also be made of various materials, such as copper, iron, aluminum, steel, aluminum alloy, or the like.

The battery cell 10 may further include an electrode terminal 4, which is configured for electrical connection with the electrode assembly 2, to output the electric energy of the battery cell 10. The electrode terminal 4 may be mounted on the case 1 or the end cover 3. In the embodiment shown in Fig. 3 and Fig. 4, the electrode terminal 4 is disposed on the wall part 11 of the case 1 opposite to the end cover 3, the end cover 3 is electrically connected to the first tab 21, and the electrode terminal 4 is electrically connected to the second tab 22.

Certainly, the end cover 3 and the first tab 21 may be directly or indirectly connected, and the electrode terminal 4 and the second tab 22 may be directly or indirectly connected. Exemplarily, the end cover 3 and the first tab 21 are indirectly connected through a current collector 5, and the electrode terminal 4 and the second tab 22 are indirectly connected through another current collector 5. The current collector 5 is a metal conductor, such as copper, iron, aluminum, steel, aluminum alloy, etc., and the current collector 5 may be circular disk-shaped.

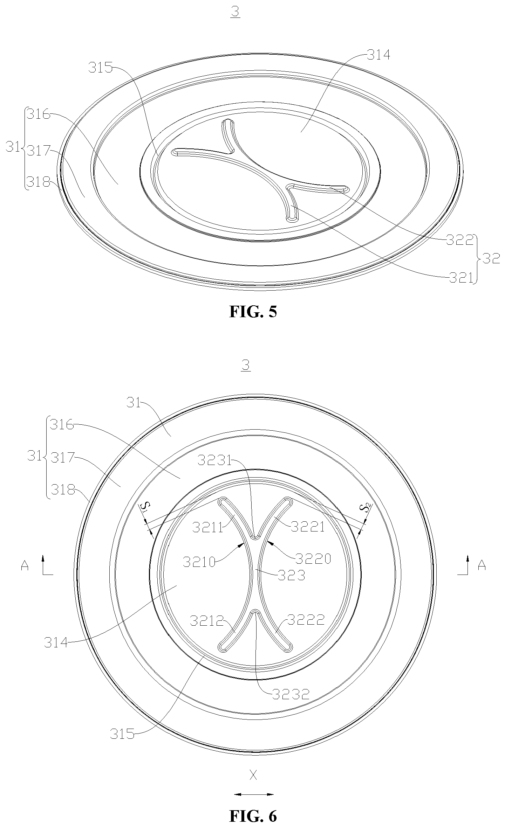

Please refer to Fig. 5 and Fig. 6, Fig. 5 is an isometric view of the end cover shown in Fig. 4; and Fig. 6 is a top view of the end cover shown in Fig. 5. The embodiments of the present application provide an end cover 3 for a battery cell 10, including a cover body 31 and a reinforcing portion 32. The cover body 31 is configured to seal the opening of the case 1 of the battery cell 10, and the cover body 31 has a first surface 311 along the thickness direction Z of the cover body 31. The reinforcing portion 32 protrudes from the first surface 311, and is configured to reinforce the cover body 31.

The cover body 31 is the body part of the end cover 3, and the cover body 31 can close the opening of the case 1. The shape of the cover body 31 can be various, such as circular, rectangular, etc. The first surface 311 can be the surface of the cover body 31 facing the case 1 along the thickness direction Z, or the surface of the cover body 31 facing away from the case 1 along the thickness direction Z. The first surface 311 can be the surface of the cover body 31 closest to the case 1 along the thickness direction Z, the surface of the cover body 31 farthest from the case 1 along the thickness direction Z, or the surface of the cover body 31 located between the surface closest to the case 1 and the surface farthest from the case 1 along the thickness direction Z. Taking the cover body 31 as a flat plate structure as an example, it has an inner surface and outer surface opposite to each other in the thickness direction Z, with the inner surface facing the case 1 along the thickness direction Z, and the first surface 311 can be either the inner or outer surface of the cover body 31.

The reinforcing portion 32 is the part of the end cover 3 that protrudes from the first surface 311 and functions as reinforcing the cover body 31. The reinforcing portion 32 can improve the rigidity of the cover body 31 and enhance the deformation resistance ability of the cover body 31, thereby improving deformation resistance ability of the entire end cover 3. The reinforcing portion 32 can be in various shapes, such as straight line, arc shape, annular shape, U shape, circle, rectangle, etc. The reinforcing portion 32 and the cover body 31 can be integrally formed. For example, the reinforcing portion 32 can be formed on the end cover 3 by stamping, so that the reinforcing portion 32 and the cover body 31 can be integrally formed; the reinforcing portion 32 and the cover body 31 can also be arranged separately and connected, such as by welding.

In the embodiment of the present application, the first surface 311 of the cover body 31 in the thickness direction Z is provided with a reinforcing portion 32. The reinforcing portion 32 reinforces the cover body 31, improving the deformation resistance ability of the end cover 3, improving the fatigue resistance performance of the end cover 3, and reducing the risk of the end cover 3 being damaged due to fatigue, which makes the end cover 3 have a longer service life, and thereby increasing the service life of the battery cell 10.

The inventor noticed that in a general battery 100, the battery cell 10 can be fixed to the external component through an adhesive layer, and the adhesive layer connects the external component and the end cover 3. The external components may be the bottom wall 327 of the box 20, a thermal management component, etc. The thermal management component is a component that manages the temperature of the battery cell 10 in the box 20, and the thermal management component may be a water-cooling plate. When gas is generated inside the battery cell 10, it may cause the battery cell 10 to expand, making the end cover 3 deform. After the end cover 3 is deformed, it may cause the end cover 3 to separate from the adhesive layer. However, in the embodiment of the present application, the arrangement of the reinforcing portion 32 improves the deformation resistance ability of the end cover 3 and reduces the risk of the end cover 3 being detached from the adhesive layer.

In some embodiments, please continue to refer to Fig. 5 and Fig. 6, the reinforcing portion 32 includes a first arc portion 321 and a second arc portion 322 protruding from the first surface 311, and the opening of the first arc portion 321 and the opening of the second arc portion 322 are facing away from each other.

The first arc portion 321 and the second arc portion 322 are in arc shape, and both protrude from the first surface 311. The central angle of the first arc portion 321 may be any angle less than 360°, such as an acute angle, a right angle, an obtuse angle, etc. The central angle of the second arc portion 322 may be any angle less than 360°, such as an acute angle, a right angle, an obtuse angle, etc. The first arc portion 321 has two ends in the extending direction, and a line (straight line) connecting the two ends of the first arc portion 321 forms an opening of the first arc portion 321. The second arc portion 322 has two opposite ends in the extending direction, and a line (straight line) connecting the two ends of the second arc portion 322 forms an opening of the second arc portion 322. The first arc portion 321 has a first arc surface 3210 away from the second arc portion 322, and the first arc surface 3210 extends to both ends of the first arc portion 321; the second arc portion 322 has a surface away from the first arc portion 321, and the second arc surface 3220 of the arc portion 321 extends to both ends of the second arc portion 322. The opening of the first arc portion 321 and the opening of the second arc portion 322 are facing away from each other, that is, the first arc surface 3210 and the second arc surface 3220 are facing away from each other.

The first arc portion 321 and the second arc portion 322 can be directly connected; the first arc portion 321 and the second arc portion 322 can also be arranged at intervals, for example, the first arc portion 321 and the second arc portion 322 can be arranged at intervals along the radial direction of the cover body 31.

In this embodiment, the first arc portion 321 and the second arc portion 322 are both in arc shape, and the openings of the two are facing away from each other. The reinforcing part 32 of this structure has a larger radiation range and can increase the reinforcement range of the cover body 31. The arc-shaped first arc portion 321 and second arc portion 322 themselves have better deformation resistance ability and are less likely to deform when subjected to a force along the thickness direction Z, which can have a better reinforcing effect on the cover body 31, further improving the deformation resistance ability and fatigue resistance performance of the end cover 3.

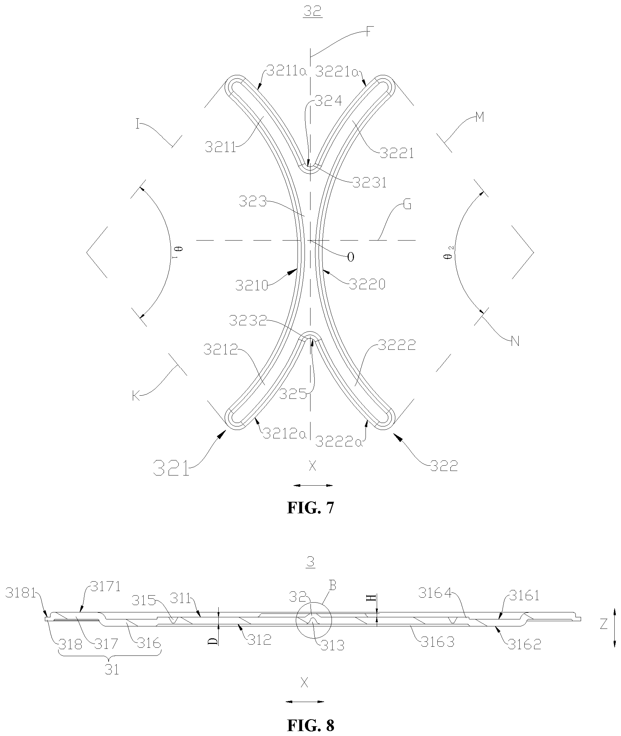

In some embodiments, please refer to Fig. 6 and Fig. 7, Fig. 7 is a schematic structural diagram of the reinforcing portion 32 shown in Fig. 6. The first arc portion 321 and the second arc portion 322 are connected to form a connection area 323. The connection area 323 has an first end 3231 and a second end 3232 opposite to each other. The first arc portion 321 includes a first arc segment 3211 and a second arc segment 3212. The second arc portion 322 includes a third arc segment 3221 and a fourth arc segment 3222. The first arc segment 3211 and the third arc segment 3221 are connected to the first end 3231. The arc segment 3212 and the fourth arc segment 3222 are connected to the second end 3232. Along the direction from the second end 3232 to the first end 3231, the distance between the first arc segment 3211 and the third arc segment 3221 gradually increases. Along the direction from the first end 3231 to the second end 3232, the distance between the second arc segment 3212 and the fourth arc segment 3222 gradually increases.

The connection area 323 is a common part of the first arc portion 321 and the second arc portion 322. In an embodiment in which the cover body 31 is circular, the first end 3231 and the second end 3232 may be two radially opposite ends of the connection area 323 along the cover body 31. The first arc segment 3211 and the second arc segment 3212 are arc portions of the first arc portion 321 located at the first end 3231 and the second end 3232 of the connection area 323 respectively. The arc length of the first arc segment 3211 and the arc length of the second arc segment 3212 may be equal or different. Apart of the first arc surface 3210 of the first arc portion 321 is located in the first arc portion 321, another part is located in the second arc portion 322, and the remaining part is located in the connection area 323. The third arc segment 3221 and the fourth arc segment 3222 are arc portions of the second arc portion 322 located at the first end 3231 and the second end 3232 of the connection area 323 respectively. The arc length of the third arc segment 3221 and the arc length of the fourth arc segment 3222 may be equal or different. A part of the second arc surface 3220 of the second arc portion 322 is located in the third arc portion, another part is located in the fourth arc portion, and the remaining part is located in the connection area 323. Exemplarily, in the embodiment shown in Fig. 7, the arc length of the first arc segment 3211 is equal to the arc length of the second arc portion 322, and the arc length of the third arc segment 3221 is equal to the arc length of the fourth arc segment 3222.

The first arc segment 3211 has a first side 3211a facing the third arc segment 3221, and the third arc segment 3221 has a third side 3221a facing the first arc segment 3211. The distance between the first arc segment 3211 and the third arc segment 3221 refers to the distance in the first direction X between the first side surface 3211a and the third side surface 3221a. The second arc segment 3212 has a second side 3212a facing the fourth arc segment 3222, and the fourth arc segment 3222 has a fourth side 3222a facing the second arc segment 3212. The distance between the second arc segment 3212 and the fourth arc segment 3222 refers to the distance in the first direction X between the second side surface 3212a and the fourth side surface 3222a. Herein, the first direction X is perpendicular to the direction from the first end 3231 to the second end 3232.

In this embodiment, the first arc portion 321 and the second arc portion 322 are connected to form a connection area 323. The connection area 323 can have a better reinforcing effect on the cover body 31. Along the direction from the second end 3232 to the first end 3231, the distance between the first arc segment 3211 and the third arc segment 3221 gradually increases, so that the reinforcing range of the first arc segment 3211 and the third arc segment 3221 gradually increases. In addition, the arc-shaped first arc segment 3211 and third arc segment 3221 themselves have good deformation resistance abilities, which further improves the reinforcing effect of the reinforcing portion 32 on the cover body 31. Along the direction from the first end 3231 to the second end 3232, the distance between the second arc segment 3212 and the fourth arc segment 3222 gradually increases, so that the reinforcing range of the second arc segment 3212 and the fourth arc segment 3222 gradually increases. The arc-shaped second arc segment 3212 and fourth arc segment 3222 themselves have good deformation resistance abilities, which further improves the reinforcing effect of the reinforcing portion 32 on the cover body 31.

In some embodiments, please continue to refer to Fig. 7, along the direction from the middle position O of the connection area 323 to the first end 3231 and the second end 3232, the width of the connection area 323 gradually increases.

The middle position O of the connection area 323 is the midpoint position of the connection line (straight line) between the first end 3231 and the second end 3232 corresponding to the connection area 323. The middle position O of the connection area 323 may be the geometric center of the connection area 323. The width of the connection area 323 is the size of the connection area 323 in the first direction X. The connecting area 323 has the smallest width at the middle position O. Exemplarily, the width of the connecting area 323 at the middle position O is less than two times the width of any one of the first arc segment 3211, the second arc segment 3212, the third arc segment 3221 and the fourth arc segment 3222.

In this embodiment, the reinforcing ability of the connecting area 323 gradually increases from the middle position a to both ends. The connecting area 323 itself has good deformation resistance ability, which improves the reinforcing effect of the connecting area 323 on the cover body 31. In addition, since the width of the connecting area 323 gradually increases from the middle position a to both ends, the distance between the first arc segment 3211 and the third arc segment 3221 gradually increases along the direction from the second end 3232 to the first end 3231, and the distance between the second arc segment 3212 and the fourth arc segment 3222 gradually increases along the direction from the first end 3231 to the second end 3232, so that the width of the reinforcing portion 32 gradually increases from the middle to both ends, and the reinforcing portion 32 has a better reinforcing effect on the cover body 31.

In some embodiments, the cover body 31 is circular, and the center line of the cover body 31 passes through the middle position O of the connection area 323.

It can be understood that the center line of the cover body 31 passes through the midpoint of the connection line between the first end 3231 and the second end 3232. The center line of the cover body 31 may be the mid-perpendicular of the connection line (straight line) between the first end 3231 and the second end 3232.

When the internal pressure of the battery cell 10 changes, the central area of the cover body 31 is most likely to deform. The central axis of the cover body 31 passes through the middle position O of the connection area 323, so that the reinforced portion 32 can reinforce the central area of the cover body 31, thereby reducing the risk of the end cover 3 being damaged due to fatigue.

In some embodiments, please continue to refer to Fig. 7, the first arc segment 3211 has a first side 3211a facing the third arc segment 3221, and the third arc segment 3221 has a side facing the first arc segment 3211. The third side 3221a, the first side 3211a and the third side 3221a are connected through the first rounded surface 324; and/or the second arc segment 3212 has a second side 3212a facing the fourth arc segment 3222, and the fourth arc segment 3222 has a fourth side 3222a facing the second arc segment 3212, and the second side 3212a and the fourth side 3222a are connected through the second fillet surface 325.

The first side 3211a, the second side 3212a, the third side 3221a and the fourth side 3222a are arc surfaces. The first side 3211a and the second side 3212a can be concentrically arranged with the first arc surface 3210. Both the side surface 3221a and the fourth side surface 3222a can be concentrically arranged with the second arc surface 3220. The first fillet surface 324 is an arc surface connecting the first side 3211a and the third side 3221a. Both the first side 3211a and the third side 3221a can be tangent to the first fillet surface 324. The second fillet surface 325 is an arc surface connecting the second side 3212a and the fourth side 3222a. Both the second side 3212a and the fourth side 3222a can be tangent to the second fillet surface 325.

The first side 3211a and the third side 3221a are connected through the first fillet surface 324, which reduces the risk of stress concentration at the connection position between the first arc segment 3211 and the third arc segment 3221; the second side 3212a and the fourth side surfaces 3222a are connected through the second rounded surface 325, which reduces the risk of stress concentration at the connection position between the second arc section 3212 and the fourth arc section 3222.

In some embodiments, please continue to refer to Fig. 7, the first arc segment 3211 and the third arc segment 3221 are symmetrically arranged; and/or, the second arc segment 3212 and the fourth arc segment 3222 are symmetrically arranged; and/or, the first arc segment 3211 and the second arc segment 3212 are arranged symmetrically; and/or the third arc segment 3221 and the fourth arc segment 3222 are arranged symmetrically.

As shown in Fig. 7, the first arc segment 3211 and the third arc segment 3221 can be arranged symmetrically with respect to the first reference plane F, and the second arc segment 3212 and the fourth arc segment 3222 can also be arranged symmetrically with respect to the first reference plane F. The connection area 323 may be a symmetrical structure symmetrical with respect to the first reference plane F. The first arc segment 3211 and the second arc segment 3212 may be arranged symmetrically with respect to the second reference plane G. The third arc segment 3221 and the fourth arc segment 3222 may also be arranged symmetrically with respect to the second reference plane G. The connection area 323 may also be a symmetrical structure symmetrical with respect to the second reference plane G, and the second reference plane G may be perpendicular to the first reference plane F.

The first arc segment 3211 and the third arc segment 3221 are symmetrically arranged. When the cover body 31 is subjected to a force, the forces on the first arc segment 3211 and the third arc segment 3221 are basically the same. The abilities of the first arc segment 3211 and the third arc segment 3221 to resist the deformation of the cover body 31 are basically the same. Both the first arc segment 3211 and the third arc segment 3221 can have a very good effect on reinforcing the cover body 31. The second arc section 3212 and the fourth arc section 3222 are arranged symmetrically. When the cover body 31 is subjected to a force, the forces on the second arc section 3212 and the fourth arc section 3222 are basically the same. The second arc section 3212 and the fourth arc section 3222 are symmetrically arranged. The abilities of the second arc segment 3212 and the fourth arc segment 3222 to resist the deformation of the cover body 31 are basically the same. Both the second arc segment 3212 and the fourth arc segment 3222 can have a very good effect on reinforcing the cover body 31. The first arc section 3211 and the second arc section 3212 are arranged symmetrically. When the cover body 31 is subjected to a force, the forces on the first arc section 3211 and the second arc section 3212 are substantially the same. The abilities of the first arc section 3211 and the second arc segment 3212 to resist the deformation of the cover body 31 are basically the same. Both the first arc segment 3211 and the second arc segment 3212 can have a very good effect on reinforcing the cover body 31. The third arc section 3221 and the fourth arc section 3222 are arranged symmetrically. When the cover body 31 is subjected to a force, the forces on the third arc section 3221 and the fourth arc section 3222 are basically the same. The abilities of the third arc section 3221 and the fourth arc segment 3222 to resist the deformation of the cover body 31 are basically the same. Both the third arc segment 3221 and the fourth arc segment 3222 can have a very good effect on reinforcing the cover body 31.

In some embodiments, please continue to refer to Fig. 7, the central angle of the first arc portion 321 is 01, which satisfies: θ1>90°; and/or, the central angle of the second arc portion 322 is θ2, which satisfies: θ2>90°.

In Fig. 7, in the extension direction of the first arc portion 321, one end of the first arc portion 321 and the center of the circle where the first arc surface 3210 is located are connected to form a first connection line I. The other end of the arc portion 321 and the center of the circle where the first arc surface 3210 is located are connected to form a second connection line K. The angle between the first connection line I and the second connection line K is the central angle θ1of the first arc portion 321. In the extending direction of the second arc portion 322, one end of the second arc portion 322 is connected to the center of the circle where the second arc surface 3220 is located to form a third connection line M. The other end of the second arc portion 322 and the center of the circle where the second arc surface 3220 is located are connected to form a fourth connection line N. The angle between the third connection line M and the fourth connection line N is the central angle θ1 of the second arc portion 322.

θ1 can be multiple angles greater than 90°, such as 100°, 135°, 180°, 225°, 270°, etc. θ2 can be multiple angles greater than 90°, such as 100°135°180°225°270°, etc. θ1 and θ2 can be equal or different. In the embodiment shown in Fig. 7, θ1=θ2.

In this embodiment, θ1>90°, which increases the reinforcement range of the first arc portion 321 on the cover body 31 is increased; θ2>90°, which increases the reinforcement range of the second arc portion 322 on the cover body 31.

In some embodiments, the reinforcing portion 32 is integrally formed with the cover body 31.

The reinforcing portion 32 is integrally formed with the cover body 31 by a variety of molding methods, such as pouring molding, stamping molding, etc.

In this embodiment, the reinforcing portion 32 and the cover body 31 are integrally formed, which can enhance the connection strength between the reinforcing portion 32 and the cover body 31, and improve the long-term reliability of the end cover 3.

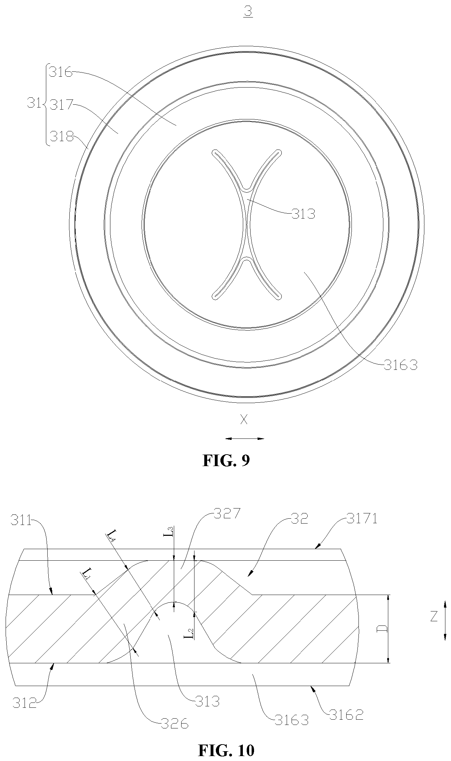

In some embodiments, please refer to Fig. 8 and Fig. 9, Fig. 8 is an A-A sectional view of the end cover 3 shown in Fig. 6; Fig. 9 is a bottom view of the end cover 3 shown in Fig. 8. Along the thickness direction Z, the cover body 31 has a second surface 312 opposite to the first surface 311. The cover body 31 is formed with a first recess 313. The first recess 313 is recessed from the second surface 312 in a direction close to the first surface 311, and a reinforcing portion 32 protruding from the first surface 311 is formed on the cover body 31 at a position corresponding to the first recess 313.

The second surface 312 is the surface of the cover body 31 opposite to the first surface 311, and the distance between the second surface 312 and the first surface 311 may be the thickness of the cover body 31. The shape of the second recessed portion 3163 is the same as the shape of the reinforcing portion 32.

During molding, the first recess 313 can be formed on the second surface 312 by stamping, thereby forming the reinforcing portion 32 protruding from the first surface 311. The forming method of the reinforcing portion 32 is simple. The arrangement of the first recess 313 causes the cover body 31 to form a recessed structure at the position where the reinforcing portion 32 is provided, so that the reinforcing portion 32 has better deformation resistance ability, improving the reinforcing effect of the reinforcing portion 32 on the cover body 31.

In some embodiments, please continue to refer to Fig. 8. Along the thickness direction Z, the height of the reinforcing portion 32 protruding from the first surface 311 is H, and the distance between the first surface 311 and the second surface 312 is D, which satisfy: 0.04 mm²≤D*H≤0.81 mm².

D*H can be a plurality of values between 0.04mm²~0.81mm², such as 0.04mm², 0.06mm², 0.1mm², 0.2mm², 0.3mm², 0.4mm², 0.5mm², 0.6mm², 0.64mm², 0.7mm², 0.81mm², etc.

When D*H<0.04mm², the thickness of at least one of D and H is too small, the end cover 3 has poor deformation resistance ability, and the end cover 3 is prone to deformation. When D*H>0.8mm², at least one of D and H is too thick, and the end cover 3 occupies a large space. Therefore, when 0.04mm2<D*H<0.81mm², on the one hand, the deformation resistance ability of the end cover 3 can be improved, and on the other hand, the end cover 3 can be prevented from occupying a large space.

In some embodiments, 0.06mm²≤D*H≤0.64mm².

In this embodiment, D*H can be a plurality of values between 0.06mm²~0.64mm², such as, 0.06mm², 0.1mm², 0.15mm², 0.2mm², 0.25mm², 0.3mm2, 0.35mm², 0.4 mm², 0.45mm², 0.5mm², 0.55mm², 0.6mm², 0.64mm², etc.

In this embodiment, 0.06mm²≤D*H≤0.64mm², on the one hand, can further improve the deformation resistance ability of the end cover 3, on the other hand, further reduce the space occupied by the end cover 3. In addition, when D*H>0.64mm², when the reinforcing portion 32 is formed by stamping, the stretching amount of the reinforcing portion 32 is too large, resulting in the weakening of the strength of the reinforcing portion 32. Therefore, D*H≤0.64mm² can improve the strength of the reinforcing part 32.

In some embodiments, 0.25mm≤H≤0.8mm; and/or, 0.25mm≤D≤0.8mm.

H can be multiple values between 0.25mm-0.8mm, such as, 0.25mm, 0.3mm, 0.35mm, 0.4mm, 0.45mm, 0.5mm, 0.55mm, 0.6mm, 0.65mm, 0.7mm, 0.75mm, 0.8mm, etc. D can be multiple values between 0.25mm-0.8mm, such as 0.25mm, 0.3mm, 0.35mm, 0.4mm, 0.45mm, 0.5mm, 0.55mm, 0.6mm, 0.65mm, 0.7mm, 0.75mm, 0.8mm etc.

When H<0.25mm, the height of the reinforcing portion 32 protruding from the first surface 311 is smaller, and the reinforcing effect of the reinforcing portion 32 on the cover body 31 is smaller. When H>0.8 mm, the height of the reinforced portion 32 protruding from the first surface 311 is larger, and the reinforced portion 32 occupies a larger space. Therefore, when 0.25 mm ≤ H ≤ 0.8 mm, on the one hand, the reinforcing effect of the reinforcing portion 32 on the cover body 31 can be improved, and on the other hand, the space occupied by the reinforcing portion 32 can be reduced. When D<0.25mm, the distance between the first surface 311 and the second surface 312 is small, the cover body 31 has poor deformation resistance ability, and the cover body 31 has poor strength. When D>0.8mm, the thickness of the cover body 31 is larger, and the cover body 31 occupies a larger space. Therefore, when 0.25mm≤H≤0.8mm, on the one hand, the deformation resistance ability and the strength of the cover body 31 can be improve, and on the other hand, the space occupied by the cover body 31 can be reduced.

In some embodiments, please refer to Fig. 10, which is a partial enlarged view of B of the end cover 3 shown in Fig. 8. The reinforcing portion 32 has a side wall 326 and a bottom wall 327. The side wall 326 surrounds the bottom wall 327. The side wall 326 and the bottom wall 327 jointly define the first recess 313. The maximum thickness of the side wall 326 is L1, and the maximum thickness of 327 is L2. Along the thickness direction Z, the distance between the first surface 311 and the second surface 312 is D, which satisfies: L1≤D, and L2≤D.

The bottom wall 327 is a wall provided along the thickness direction Z of the reinforcing portion 32. Along the thickness direction Z, the bottom wall 327 is opposite to the opening of the first recess 313. The side wall 326 is a portion of the reinforcing portion 32 surrounding the bottom wall 327, and the extension trajectory of the side wall 326 is the same as the shape of the first recess 313. The thickness of sidewall 326 may be uniform or non-uniform. If the thickness of the side wall 326 is uniform, the maximum thickness of the side wall 326 is equal to the minimum thickness of the side wall 326. The thickness of the bottom wall 327 may be uniform or non-uniform. If the thickness of the bottom wall 327 is uniform, the maximum thickness of the bottom wall 327 is equal to the minimum thickness of the bottom wall 327.

In the embodiment shown in Fig. 10, the thickness of the side wall 326 is non-uniform, and along the depth direction of the first recess 313, the thickness of the side wall 326 gradually decreases; the thickness of the bottom wall 327 is also non-uniform, and along the width direction of the first recess 313, the thickness of the bottom wall 327 gradually increases from the middle to both ends.

L1 and L2 are not greater than D, so that the maximum thickness of the side wall 326 and the maximum thickness of the bottom wall 327 will not exceed the distance between the first surface 311 and the second surface 312, which can simplify the molding process. The reinforcing portion 32 can be formed by stamping, and the forming method is simple.

In some embodiments, the minimum thickness of the bottom wall 327 is L3, and the minimum thickness of the side wall 326 is L4, which satisfy: D-L3≤0.2mm; and/or, D-L4≤02mm.

D-L3 can be multiple values from 0-0.2mm, such as 0.01mm, 0.04mm, 0.08mm, 0.1mm, 0.12mm, 0.16mm, 0.2mm, etc. D-L4 can be multiple values from 0 to 0.2mm, such as 0.01mm, 0.04mm, 0.08mm, 0. 1mm, 0.12mm, 0.16mm, 0.2mm, etc.

If D-L3>0.2mm, the minimum thickness of the bottom wall 327 is small, and the strength of the bottom wall 327 is poor, and the bottom wall 327 is easily damaged. Therefore, when D-L3≤0.2mm, it can ensure that the bottom wall 327 has sufficient strength; if D-L4>0.2mm, the minimum thickness of the side wall 326 is smaller, and the strength of the side wall 326 is poor, and the side wall 326 is easily damaged. Therefore, when D-L4≤0.2mm, it can ensure that the side wall 326 has sufficient strength.

In some embodiments, please continue to refer to Fig. 5, Fig. 6 and Fig. 8, the cover body 31 has a pressure relief area 314, the first surface 311 is at least partially located in the pressure relief area 314, and the cover body 31 is formed with a scored groove 315. The scored groove 315 is formed along the edge of the pressure relief area 314, and the pressure relief area 314 is configured to open with the scored groove 315 as a boundary when the battery cell 10 is depressurized. Herein, the reinforcing portion 32 is provided in the pressure relief area 314.

The pressure relief area 314 is a portion of the cover body 31 that can be opened with the scored groove 315 as a boundary when the battery cell 10 is pressure released. After the pressure relief area 314 is opened, the cover body 31 can form a discharge port at a position corresponding to the pressure relief area 314, and the emissions inside the battery cell 10 can be discharged through the discharge port to release the pressure inside the battery cell 10. The first surface 311 may be completely located in the pressure relief area 314, or may be partially located in the pressure relief area 314.

The remaining portion of the cover body 31 at the position where the scored groove 315 is formed is a weak portion, and the strength of the weak portion is less than the strength of other areas of the cover body 31, making the cover body 31 weaker at the position where the scored groove 315 is formed and easier to be destroyed. When the pressure inside the battery cell 10 reaches the detonation pressure, the weak portion will be destroyed by the effect of the emissions (electrolyte, gas, etc.) inside the battery cell 10, causing the pressure relief area 314 to open outward. The pressure relief area 314 may be opened by flipping outward or disengaging. The scored groove 315 can be formed on the first surface 311 or the second surface 312. The scored groove 315 can be in various shapes, such as annular shape, arc shape, U shape, H shape, etc. The scored groove 315 can be formed in a variety of methods, such as stamping, milling, etc.

The arrangement of the pressure relief area 314 enables the end cover 3 to have a pressure relief function. The pressure relief area 314 can be opened with the scored groove 315 as the boundary, and has a large pressure relief area. The reinforcing portion 32 is disposed in the pressure relief area 314. The reinforcing portion 32 has a reinforcing effect on the pressure relief area 314, and improves the deformation resistance ability of the pressure relief area 314. When the internal pressure of the battery cell 10 changes, the pressure relief area 314 is less likely to deform, reducing the risk of the pressure relief area 314 being opened during normal use of the battery cell 10.

In some embodiments, the scored groove 315 is a groove extending along a closed trajectory.

The closed trajectory can be in various shapes, such as circular, rectangular, elliptical, etc.

When the battery cell 10 is depressurized, the pressure relief area 314 can be opened in a manner to separate from the outside of the battery cell 10, so that the battery cell 10 has a larger pressure relief area, improving the pressure relief efficiency.

In some embodiments, the scored groove 315 is annular.

It can be understood that the scored groove 315 is a groove extending along a circular trajectory. The annular scored groove 315 has a simple structure and is easy to form.

In some embodiments, the cover body 31 is circular, and the scored groove 315 is coaxially arranged with the cover body 31.

The cover body 31 is a circular structure. It can be understood that the outer edge of the cover body 31 is circular. The end cover 3 of this structure is a circular end cover. The scored groove 315 is coaxially arranged with the cover body 31, that is, the center line of the scored groove 315 coincides with the center line of the cover body 31.

In this embodiment, the scored groove 315 is coaxially arranged with the cover body 31, and the pressure relief area 314 defined by the scored groove 315 is located in the central area of the cover body 31, which is conducive to timely opening of the pressure relief area 314 for pressure relief.

In some embodiments, the first surface 311 faces the interior of the case 1, and the scored groove 315 is provided on the first surface 311.

After the end cover 3 closes the opening of the case 1, the first surface 311 will face the inside of the case 1. Since the scored groove 315 is disposed on the first surface 311 and the first surface 311 faces the interior of the case 1, the scored groove 315 faces the interior of the battery cell 10, and the scored groove 315 is not exposed to the outside of the battery cell 10, reducing the risk of oxidation at the position on the cover body 31where the scored groove 315 is formed due to exposure to the outside of the battery cell 10. Since the reinforcing portion 32 is disposed on the first surface 31, which faces the interior of the case 1, the reinforcing portion 32 can utilize the internal space of the battery cell 10, and the reinforcing portion 32 does not occupy the external space of the battery cell 10.

In some embodiments, please continue to refer to Fig. 6, the reinforcing portion 32 includes a first arc portion 321 and a second arc portion 322 protruding from the first surface 311, and the opening of the first arc portion 321 and opening of the second arc portion 322 are arranged away from each other. The minimum distance between the end of the first arc portion 321 in its extension direction and the scored groove 315 is S1, which satisfies: S1>0.5mm; and/or, the minimum distance between the end of the second arc portion 322 in its extension direction and the scored groove 315 is S2, which satisfies: S2>0.5mm.

S1 can be multiple values greater than 0.5mm, such as 0.6mm, 0.7mm, 0.8mm, 0.9mm, 1mm, etc. S2 can be multiple values greater than 0.5mm, such as 0.6mm, 0.7mm, 0.8mm, 0.9mm, 1mm, etc. S1 and S2 can be equal or different.

In the embodiment shown in Fig. 6, the first arc portion 321 has two ends in its extension direction, one end is the end of the first arc segment 3211 away from the connection area 323, and the other end is the end of the second arc segment 3212 away from the connection area 323. The minimum distance between the end of the first arc segment 3211 away from the connection area 323 and the scored groove 315 and the minimum distance between the end of the second arc segment 3212 away from the connection area 323 and the scored groove 315 are both S1. The second arc portion 322 has two ends in its extending direction, one end is the end of the third arc segment 3221 away from the connection area 323, and the other end is the end of the fourth arc segment 3222 away from the connection area 323. The minimum distance between the end of the third arc segment 3221 away from the connection area 323 and the scored groove 315 and the minimum distance between the end of the fourth arc segment 3222 away from the connection area 323 and the scored groove 315 are both S2.

S1>0.5mm, which reduces the influence of the first arc portion 321 on the scored groove 315, and the risk of squeezing the scored groove 315 due to the end of the first arc portion 321 being too close to the scored groove 315 is reduced. S2>0.5mm, which reduces the influence of the second arc portion 322 on the scored groove 315, and reduces the risk of squeezing the scored groove 315 due to the end of the second arc portion 322 being too close to the scored groove 315.

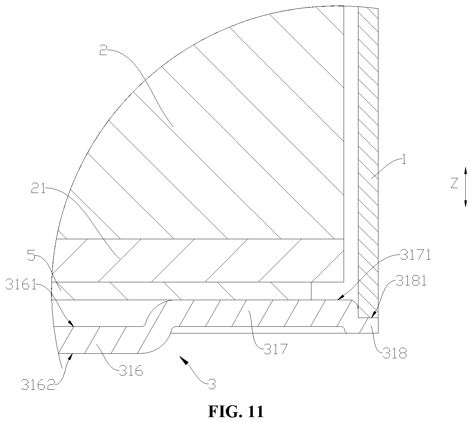

In some embodiments, please continue to refer to Fig. 8 and Fig. 11, Fig. 11 is a partial enlarged view of C of the battery cell 10 shown in Fig. 4. The cover body 31 includes a body part 316 and a connection part 317. The body part 316 has a first surface 311. The connection part 317 is arranged around the outer edge of the body part 316. In the thickness direction Z, the connection part 317 protrudes from the body part 316 in a direction facing the interior of the case 1. The connection part 317 is configured to extend into the case 1 and form a positioning fit with the case 1.

The connection part 317 is a portion of the cover body 31 for forming a positioning fit with the case 1, and the body part 316 is a portion of the cover body 31 located inside the connection part 317. In an embodiment in which the end cover 3 is circular, the body part 316 may be a circular region located in the central region of the cover body 31, and the connection part 317 may be an annular region surrounding the outside of the body part 316. The connection part 317 and the body part 316 may be an integrally formed structure. The reinforcing portion 32 is provided on the body part 316, and the reinforcing portion 32 can reinforce the body part 316.

After the end cover 3 is assembled with the case 1, the outer peripheral surface of the connection part 317 contacts the inner peripheral surface of the case 1, so that the connection part 317 and the case 1 are positioned and matched. Both the outer peripheral surface of the connection part 317 and the inner peripheral surface of the case 1 extend in the thickness direction Z. Exemplarily, the outer peripheral surface of the connection part 317 and the inner peripheral surface of the case 1 are both cylindrical surfaces extending along the thickness direction Z.

In an embodiment in which the end cover 3 is electrically connected to the first tab 21 of the electrode assembly 2, the connection part 317 may be a portion of the end cover 3 for electrical connection with the first tab 21. In some embodiments, the connection part 317 is directly connected to the first tab 21, for example, the connection part 317 is welded to the tab; in other embodiments, as shown in Fig. 11, the connection part 317 is indirectly connected to the first tab 21 through the current collector 5, for example, the current collector 5 is welded to the first tab 21, and the connection part 317 is welded to the current collector 5.

In this embodiment, the connection part 317 protrudes from the body part 316 in a direction facing the interior of the case 1. The connection part 317 can form a positioning fit with the case 1, which can improve the assembly efficiency of the end cover 3 and the case 1.

In some embodiments, please continue to refer to Fig. 8 and 11. Along the thickness direction Z, the connection part 317 has a third surface 3171 facing the interior of the case 1. The first surface 311 faces the interior of the case 1, and the reinforcing portion 32 does not exceed the third surface 3171 in the direction facing the interior of the case 1.

The third surface 3171 is the inner surface of the connection part 317 facing the interior of the case 1 along the thickness direction Z, and the third surface 3171 may be a annular surface. In the embodiment in which the connection part 317 is directly connected to the first tab 21, the third surface 3171 abuts the first tab 21; as shown in Fig. 11, in the embodiment in which the connection part 317 is connected to the first tab through the current collector 5, the third surface 3171 abuts the current collector 5.

Along the thickness direction Z, the surface of the reinforcing portion 32 facing the interior of the case 1 can be flush with the third surface 3171, or can be further away from the electrode assembly 2 located in the case 1 than the third surface 3171, so as to achieve that the reinforcing portion 32 does not exceed the third surface 3171 along the direction facing the interior of the case 1.

In this embodiment, the reinforcing portion 32 does not exceed the third surface 3171 along the direction facing the interior of the case 1. When the third surface 3171 of the connection part 317 abuts against the internal components of the battery cell 10 (such as the first tab 21 or the current collector 5, etc.), the reinforcing portion 32 is less likely to interfere with the internal components of the battery cell 10.

In some embodiments, along the thickness direction Z, the body part 316 has a fourth surface 3161 and a fifth surface 3162 opposite to each other, and the connection part 317 protrudes from the fourth surface 3161. The body part 316 has a pressure relief area 314. The body part 316 is formed with a scored groove 315 and a second recess 3163. The scored groove 315 is formed along the edge of the pressure relief area 314. The pressure relief area 314 is configured to open with the scored groove 315 as a boundary when the battery cell 10 is pressure released, and the second recess 3163 is recessed from the fifth surface 3162 in a direction close to the fourth surface 3161. Herein, the projection of the bottom surface of the second recess 3163 along the thickness direction Z covers the scored groove 315.

The fourth surface 3161 faces the interior of the case 1, and the fourth surface 3161 and the first surface 311 may be the same surface of the body part 316; in the embodiment shown in Fig. 8, the fourth surface 3161 and the first surface 311 may also be two surfaces that are certain distance apart in thickness direction Z. The fifth surface 3162 is a surface of the body part 316 facing away from the case 1 along the thickness direction Z. The fifth surface 3162 may be an annular surface surrounding the outside of the second recess 3163.

The connection part 317 protrudes from the fourth surface 3161 along a direction close to the interior of the case 1. The second recess 3163 may be a cylindrical groove, a rectangular parallelepiped groove, or the like. The scored groove 315 can be formed on the first surface 311 or on the bottom surface of the second recess 3163. In the embodiment shown in Fig. 8, the scored groove 315 is formed on the first surface 311.

The second recess 3163 is arranged such that there is a certain distance between the pressure relief area 314 and the fifth surface 3162. When the fifth surface 3162 is in contact with external components, the influence of the external components on the pressure relief area 314 can be reduced, so that the pressure area 314 can be opened outward when the battery cell 10 is depressurized, thereby reducing the risk that the pressure release area 314 will be obstructed by external components, causing the pressure release area 314 to fail to open normally. Herein, the external components may be the bottom wall 327, thermal management components, etc. of the box body 20.

In some embodiments, along the thickness direction Z, the fifth surface 3162 is the surface of the end cover 3 farthest from the case 1.

The fifth surface 3162 is the surface of the end cover 3 furthest away from the case 1 along the thickness direction Z, and is also the surface of the battery cell 10 furthest away from the case 1 along the thickness direction Z. Along the thickness direction Z, the fifth surface 3162 is further away from the case 1 than the connection part 317.

The fifth surface 3162 can be used as a supporting surface for the battery cell 10. When the battery cell 10 is placed on an external component, the fifth surface 3162 contacts the external component to ensure the stability of the battery cell 10 when placed on the external component.

In some embodiments, a convex portion 3164 protruding from the fourth surface 3161 is formed at the position of the body part 316 corresponding to the second recess 3163, and the surface of the convex portion 3164 away from the fourth surface 3161 is the first surface 311.

The shape of the convex portion 3164 may be the same as the shape of the second recess 3163. Taking the second recess 3163 as a cylindrical groove as an example, the convex portion 3164 can be a cylindrical boss protruding from the fourth surface 3161. The second recess 3163 can be formed on the fifth surface 3162 by stamping, thereby forming a convex portion 3164 protruding from the fourth surface 3161.

In this embodiment, the arrangement of the convex portion 3164 can increase the strength of the area of the body part 316 where the second recess 3163 is formed.

In some embodiments, along the thickness direction Z, the bottom surface of the second recess 3163 is opposite to the first surface 311. The body part 316 is formed with a first recess 313. The first recess 313 is recessed from the bottom surface of the second recess 3163 in a direction close to the first surface 311, and a reinforcing portion 32 protruding from the third recess 313 is formed at a position of the body part 316 corresponding to the first recess 313.

The bottom surface of the second recess 3163 is the second surface 312 of the cover body 31. Along the thickness direction Z, the distance between the fourth surface 3161 and the fifth surface 3162 may be equal to the distance between the first surface 311 and the second surface 312.

During molding, the first recess 313 can be formed on the bottom surface of the second recess 3163 by stamping, thereby forming the reinforced portion 32 protruding from the first surface 311. The molding method of the reinforcing portion 32 is simple. The arrangement of the first recess 313 causes the body part 316 to form a recessed structure at the position where the reinforcing portion 32 is disposed, so that the reinforcing portion 32 has better deformation resistance ability, improving the reinforcing effect of the reinforcing portion 32 on the body part 316.

In some embodiments, please continue to refer to Fig. 8 and Fig. 11, the cover body 31 further includes an edge portion 318. The edge portion 318 surrounds the outer edge of the connection part 317. The edge portion 318 is configured to connect the end of the case 1 formed with the opening.

The edge portion 318 is the portion where the cover body 31 is connected to the case 1. The edge portion 318 and the case 1 can be connected in a variety of ways, such as welding, bonding, etc. The edge portion 318 may be an annular structure surrounding the outside of the connection part 317.

Along the thickness direction Z, the edge portion 318 has a step surface 3181 facing the case 1. The step surface 3181 is connected to the outer peripheral surface of the connection part 317. The step surface 3181 is configured to abut against the end of the case 1 formed with the opening, so that the cover body 31 closes the opening of the case 1.

In an embodiment in which the fifth surface 3162 is the surface of the end cover 3 farthest away from the case 1 along the thickness direction Z, the fifth surface 3162 may be farther away from the case than the edge portion 318 along the thickness direction Z. 1. There is a height difference between the fifth surface 3162 and the edge in the thickness direction Z, so that the welding slag generated by the welding of the edge 318 and the case 1 is less likely to protrude from the fifth surface 3162, ensuring the flatness of the fifth surface 3162, and ensuring the stability of the battery cell 10 when the fifth surface 3162 serves as a supporting surface.

When assembling the end cover 3 and the case 1, after the connection part 317 is positioned and matched with the case 1, the edge portion 318 can be abut against the end of the case 1 formed with the opening, and the edge portion 318 can be easily connected to the end of the case formed with the opening, for example, the edge portion 318 is welded to the end of the case 1 formed with the opening.

In some embodiments, the material of the end cover 3 includes at least one of steel, stainless steel, and nickel-plated steel.

The material of the end cover 3 can be steel, stainless steel, or nickel-plated steel, or two or three of steel, stainless steel, and nickel-plated steel. In the embodiment in which the end cover 3 is made of nickel-plated steel, after the scored groove 315 is formed on the end cover 3, the nickel layer of the end cover 3 at the position where the scored groove 315 is formed may be damaged. The position of the end cover 3 where the groove 315 is formed is easily oxidized. In the embodiment in which the scored groove 315 is formed on the first surface 311, the scored groove 315 is not exposed to the outside of the battery cell 10, which reduces the risk of oxidation at the position of the end cover 3 where the scored groove 315 is formed, and can effectively increase the service life of the end cover 3.

In this embodiment, the end cover 3 has better strength and stiffness and longer service life.

An embodiment of the present application provides a battery cell 10, including a case 1 and an end cover 3 provided in any of the above embodiments. The case 1 has an opening, and the cover body 31 closes the opening.

In some embodiments, along the thickness direction Z, the first surface 311 faces the interior of the case 1.

In other embodiments, the first surface 311 may also be the surface of the cover body 31 away from the case 1 along the thickness direction Z.

An embodiment of the present application provides a battery 100, including the battery cell 10 provided in any of the above embodiments.

An embodiment of the present application provides an electrical device, including the battery 100 provided in any of the above embodiments.

Referring to Fig. 5 to Fig. 9, embodiments of the present application provide a circular end cover. The end cover 3 is configured to close the opening of the case 1 of the battery cell 10. The end cover 3 includes a cover body 31 and a reinforcing portion 32, and the reinforcing portion 32 is provided on the cover body 31. The cover body 31 includes a body part 316, a connection part 317 and an edge portion 318. The connection part 317 is arranged around the outer edge of the body part 316. The edge portion 318 is arranged around the outer edge of the connection part 317, and the connection part 317 is configured for extending to the case 1 and forms a positioning fit with the case 1. The edge portion 318 is configured to connect the end of the case 1 formed with the opening. Along the thickness direction Z of the cover body 31, the body part 316 has a fourth surface 3161 and a fifth surface 3162 opposite to each other, the connection part 317 protrudes from the fourth surface 3161, and the fifth surface 3162 is a surface of the end cover 3 furthest away from the case 1. The connection part 317 and the body part 316 are all closer to the case 1 than the fifth surface 3162. The body part 316 is formed with a scored groove 315 and a second recess 3163. The second recess 3163 is recessed from the fifth surface 3162 in a direction close to the fourth surface 3161. The scored groove 315 is annular, and the scored groove 315 defines a pressure area 314. The pressure relief area 314 is configured to open with the scored groove 315 as a boundary when the battery cell 10 is depressurized, and the projection of the bottom surface of the second recess 3163 along the thickness direction Z covers the scored groove 315. The body part 316 forms a convex portion 3164 protruding from the fourth surface 3161 at a position corresponding to the second recess 3163. The surface of the convex portion 3164 away from the fourth surface 3161 is the first surface 311. The scored groove 315 is formed on the first surface. 311. The bottom surface of the second recess 3163 is the second surface 312, and the second surface 312 and the first surface 311 are arranged opposite to each other along the thickness direction Z. The body part 316 is further formed with a first recess 313. The first recess 313 is recessed from the second surface 312 in a direction close to the first surface 311, and a reinforcing portion 32 protruding from the first recess 313 is formed at a position of the body part 316 corresponding to the first recess 313.

Herein, the reinforcing portion 32 includes a first arc portion 321 and a second arc portion 322 provided on the first surface 311, and the opening of the first arc portion 321 and the opening of the second arc portion 322 are arranged opposite to each other. The first arc portion 321 and the second arc portion 322 are connected to form a connection area 323. The connection area 323 has an first end 3231 and a second end 3232 opposite to each other. The first arc portion 321 includes a first arc segment 3211 and a second arc segment 3212. The second arc portion 322 includes a third arc segment 3221 and a fourth arc segment 3222. The first arc segment 3211 and the third arc segment 3221 are connected to the first end 3231. The arc segment 3212 and the fourth arc segment 3222 are connected to the second end 3232. Along the direction from the second end 3232 to the first end 3231, the distance between the first arc segment 3211 and the third arc segment 3221 gradually increases. Along the direction from the first end 3231 to the second end 3232, the distance between the second arc segment 3212 and the fourth arc segment 3222 gradually increases. Along the direction from the middle position of the connection area 323 to the first end 3231 and the second end 3232, the width of the connection area 323 gradually increases. The first arc segment 3211 has a first side 3211a facing the third arc segment 3221, and the third arc segment 3221 has a side facing the first arc segment 3211. The third side 3221a, the first side 3211a and the third side 3221a are connected through the first rounded surface 324; and/or the second arc segment 3212 has a second side 3212a facing the fourth arc segment 3222, and the fourth arc segment 3222 has a fourth side 3222a facing the second arc segment 3212, and the second side 3212a and the fourth side 3222a are connected through the second fillet surface 325. The first arc segment 3211 and the third arc segment 3221 are symmetrically arranged; the second arc segment 3212 and the fourth arc segment 3222 are symmetrically arranged; the first arc segment 3211 and the second arc segment 3212 are arranged symmetrically; the third arc segment 3221 and the fourth arc segment 3222 are arranged symmetrically. The central angle of the first arc portion 321 is 01, which satisfies: θ1>90°; the central angle of the second arc portion 322 is Θ2, which satisfies: θ2>90°.

In addition, the height of the reinforced portion 32 protruding from the first surface 311 is H, and the distance between the first surface 311 and the second surface 312 is D, where 0.04mm²≤D*H≤0.81mm². The minimum distance between the end of the first arc portion 321 in its extension direction and the scored groove 315 is S1, where S1>0.5mm; the minimum distance between the end of the second arc portion 322 in its extension direction and the scored groove 315 is S2, where S2>0.5mm.

It should be noted that, as long as there is no conflict, the embodiments and features in the embodiments of the present application can be combined with each other.

The above embodiments are only used to illustrate the technical solutions of the present application, and are not used to limit the present application. For those skilled in the art, the present application may have various modifications and changes. Any modifications, equivalent replacements, improvements, etc. made within the spirit and principles of this application shall be included in the protection scope of this application.

## Claims

1. An end cover for a battery cell, comprising:
a cover body, configured to close an opening of a case of the battery cell, wherein the cover body has a first surface along a thickness direction of the cover body; and
a reinforcing portion, protruding from the first surface, wherein the reinforcing portion is configured to reinforce the cover body.

2. The end cover according to claim 1, wherein the reinforcing portion comprises a first arc portion and a second arc portion protruding from the first surface, and an opening of the first arc portion is arranged opposite to an opening of the second arc portion.

3. The end cover according to claim 2, wherein the first arc portion and the second arc portion are connected to form a connection area, and the connection area has a first end and a second end opposite to each other, wherein the first arc portion comprises a first arc segment and a second arc segment, the second arc portion comprises a third arc segment and a fourth arc segment, the first arc segment and the third arc segment are connected to the first end, and the second arc segment and the fourth arc segment are connected to the second end;
a distance between the first arc segment and the third arc segment gradually increases along a direction from the second end to the first end; and
a distance between the second arc segment and the fourth arc segment gradually increases along a direction from the first end to the second end.

4. The end cover according to claim 3, wherein a width of the connection area gradually increases along a direction from a middle position of the connection area to the first end and the second end.

5. The end cover according to claim 4, wherein the cover body is circular, and a center line of the cover body passes through the middle position.

6. The end cover according to any one of claims 3 to 5, wherein the first arc segment has a first side facing the third arc segment, the third arc segment has a third side facing the first arc segment, and the first side and the third side are connected by a first fillet surface; and/or
the second arc segment has a second side facing the fourth arc segment, the fourth arc segment has a fourth side facing the second arc segment, and the second side and the fourth side are connected by a second fillet surface.

7. The end cover according to any one of claims 3 to 6, wherein the first arc segment and the third arc segment are arranged symmetrically; and/or the second arc segment and the fourth arc segment are arranged symmetrically; and/or the first arc segment and the second arc segment are arranged symmetrically; and/or the third arc segment and the fourth arc segment are arranged symmetrically.

8. The end cover according to any one of claims 2 to 7, wherein a central angle of the first arc portion, θ₁, satisfies: θ₁>90°; and/or a center angle of the second arc portion, θ₂, satisfies: θ₂>90°.

9. The end cover according to any one of claims 1 to 8, wherein the reinforcing portion is integrally formed with the cover body.

10. The end cover according to any one of claims 1 to 9, wherein the cover body has a second surface opposite to the first surface along the thickness direction, and the cover body is formed with a first recess, wherein the first recess is recessed from the second surface along a direction close to the first surface, and the reinforcing pat protruding from the first surface is formed at a position of the cover body corresponding to the first recess.

11. The end cover according to claim 10, wherein along the thickness direction, a height of the reinforcing portion protruding from the first surface, H, and a distance between the first surface and the second surface, D, satisfy: 0.04mm²≤D*H≤0.81mm².

12. The end cover according to claim 11, wherein 0.06mm²≤D*H≤0.64mm².

13. The end cover according to claim 11 or 12, wherein 0.25mm≤H≤0.8mm; and/or 0.25mm≤D≤0.8mm.

14. The end cover according to any one of claims 10 to 13, wherein the reinforcing portion has a side wall and a bottom wall, the side wall surrounds the bottom wall, and the side wall and the bottom wall jointly define the first recess, wherein a maximum thickness of the side wall is L₁, and a maximum thickness of the bottom wall is L₂,
a distance between the first surface and the second surface along the thickness direction is D, where L₁≤D and L₂≤D.

15. The end cover according to claim 14, wherein a minimum thickness of the bottom wall, L₃, and a minimum thickness of the side wall, L₄, satisfy: D-L₃≤0.2mm and/or D-L₄≤0.2 mm.

16. The end cover according to any one of claims 1 to 15, wherein the cover body has a pressure relief area, the first surface is at least partially located in the pressure relief area, the cover body is formed with a scored groove, the scored groove is arranged along an edge of the pressure relief area, and the pressure relief area is configured to open with the scored groove as a boundary when the battery cell is depressurized,
wherein the reinforcing portion is provided in the pressure relief area.

17. The end cover of claim 16, wherein the scored groove is a groove extending along a closed trajectory.

18. The end cover of claim 16 or 17, wherein the scored groove is annular.

19. The end cover according to claim 18, wherein the cover body is circular, and the scored groove is coaxially arranged with the cover body.

20. The end cover according to any one of claims 16 to 19, wherein the first surface faces an interior of the case, and the scored groove is formed on the first surface.

21. The end cover according to any one of claims 16 to 20, wherein the reinforcing portion comprises a first arc portion and a second arc portion protruding from the first surface, and an opening of the first arc portion is arranged opposite to an opening of the second arc portion;
a minimum distance between an end of the first arc portion in its extension direction and the scored groove, S₁, satisfies: S₁>0.5mm; and/or a minimum distance between an end of the second arc portion in its extension direction and the scored groove, S₂, satisfies: S₂>0.5mm.

22. The end cover according to any one of claims 1 to 21, wherein the cover body comprises a body part and a connection part, the body part has the first surface, and the connection part is arranged around an outer edge of the case, wherein in the thickness direction, the connection part protrudes from the body part along a direction facing an interior of the case, and the connection part is configured to extend into the case and form a positioning fit with the case.

23. The end cover according to claim 22, wherein the connection part has a third surface facing the interior of the case along the thickness direction, the first surface faces the interior of the case, and the reinforcing portion does not extend beyond the third surface along a direction facing the interior of the case.

24. The end cover according to claim 22 or 23, wherein the body part has a fourth surface and a fifth surface opposite to each other along the thickness direction, and the connection part protrudes from the fourth surface; and
the cover body has a pressure relief area, the body part is formed with a scored groove and a second recess, and the scored groove is arranged along an edge of the pressure relief area, wherein the pressure relief area is configured to open with the scored groove as a boundary when the battery cell is depressurized, and the second recess is recessed from the fifth surface along a direction close to the fourth surface,
wherein a projection of a bottom surface of the second recess along the thickness direction covers the scored groove.

25. The end cover according to claim 24, wherein the fifth surface is a surface of the end cover farthest from the case along the thickness direction.

26. The end cover according to claim 24 or 25, wherein a convex portion protruding from the fourth surface is formed at a position of the body part corresponding to the second recess, and a surface of the convex portion facing away from the fourth surface is the first surface.

27. The end cover according to any one of claims 24 to 26, wherein the bottom surface of the second recess is arranged opposite to the first surface along the thickness direction; and
the body part is formed with a first recess, the first recess is recessed from the bottom surface of the second recess along a direction close to the first surface, and the reinforcing pat protruding from the first surface is formed at a position of the cover body corresponding to the first recess.

28. The end cover according to any one of claims 22 to 27, wherein the cover body further comprises an edge portion, the edge portion is arranged around an outer edge of the connection part, and the edge portion is configured to connect to an end of the case formed with the opening.

29. The end cover according to any one of claims 1 to 28, wherein a material of the end cover comprises at least one of steel, stainless steel and nickel-plated steel.

30. A battery cell, comprising:
a case formed with an opening; and
the end cover according to any one of claims 1 to 29, wherein the cover body is configured to close the opening.

31. The battery cell according to claim 30, wherein the first surface is configured to face an interior of the case along the thickness direction.

32. A battery, comprising the battery cell as claimed in claim 29 or 30.

33. An electrical device, comprising the battery as claimed in claim 32.
